# EUROPEAN PATENT APPLICATION

(11) **EP 2 442 556 A1**
(43) Date of publication of application: **18.04.2012**
(21) Application number: 10306120.6
(22) Date of filing: 15.10.2010
(51) Int. Cl.: H04N 5/355

(54) **Apparatus and method for capturing images with high dynamic range**

(71) Applicant: ST-Ericsson SA, 1228 Plan-les-Ouates (CH)
(72) Inventor: Valente, Stéphane, 75020, PARIS (FR)
(74) Representative: Cabinet Plasseraud

(57) **Abstract**

A sensor arrangement comprises a driver and a sensor wherein a photodiode array is addressed by row and column, rows or/and columns being grouped to define a plurality of different areas of pixels, the sensor comprising at least two arrangements of a plurality of areas, each arrangement being called a zone.

A filter grid fits with the photodiode array, each area comprising the same patterns arrangement.

The sensor is configured to be driven by the driver to simultaneously capture at least two pictures with different exposure times, each of the at least two pictures being captured in a respective zone, a final picture being reconstructed by a merging operation of at least the two pictures captured.

## Description

### Technical field

This invention involves the CMOS image sensor field, especially those providing a high dynamic range.

### Background technology

Classical CMOS image sensors used in digital cameras or cameraphones can acquire pictures with a limited dynamic range, corresponding to the dynamics of their photodiodes.

In camera phones or lower-end digital cameras, the sensors are typically small, and have a low dynamic range, whereas real scenes can have dynamic ranges above 16 stops. Thus, it is not possible to capture all the details of such scenes using a single exposure without missing details in underexposed/dark areas and/or overexposed/bright areas.

To obtain higher dynamic range captures, one can resort to multiple shot techniques. For example, as it is described in the publication called "Recovering High Dynamic Range Radiance Maps from Photographs" by P. Debevec and J. Malik.

This publication illustrates multiple shot techniques using the same sensor. Multiple pictures of the same scene are acquired one after the other by varying the exposition settings, to cover multiple stops. The pictures that used a short exposure time will contain useful details for the brightest parts of the scene, and the ones that used a long exposure time will contain useful details for the darkest parts of the scene.

After spatially aligning the various pictures, an algorithm may be used to merge the information from the various pictures and obtain a recovered picture with a dynamic range much higher than that of a single shot.

The main drawback of this solution using consecutive shots is that it can work only for static scenes, without moving objects. It is also necessary to spatially align the multiple pictures before merging them. This operation often requires a specific algorithm, which is an inconvenience.

Another alternative of acquiring high dynamic range captures consists in having a special sensor that can simultaneously take multiple pictures with different sensibilities, like the Fujitsu Super CCD EXR.

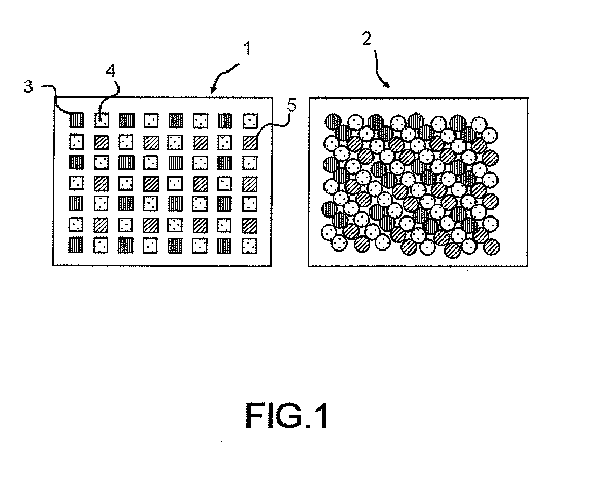

Figure 1 illustrates one general CDD structure 1 on the left side and one Fujifilm super CCD EXR structure 2 on the right side of the figure.

The general CDD sensor comprises red pixels 3, green pixels 4 and blue pixels 5.

Compared to a general sensor, the Fujifilm sensor combines two types of pixels:
- S-pixels having a large area and high sensitivity
- R-pixels having a small area and low sensitivity

The S-pixel has normal sensitivity and captures the same range of light as a conventional CCD sensor, the R-pixel is smaller and has a lower sensitivity and is designed to capture details above the saturation point of the 'S' pixel, the camera can then combine the information from the 'S' and 'R' pixels to produce an extended dynamic range and avoid the loss of detail due to over-exposure

The two types of pixels are exposed simultaneously when a shot is acquired by the sensor.

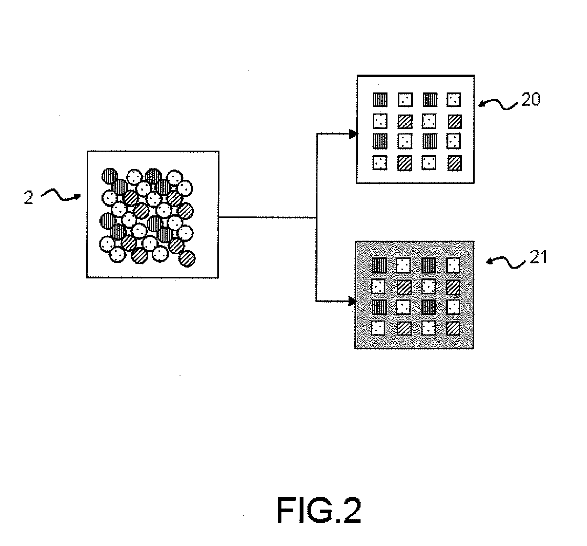

Figure 2 illustrates the merging operation related to the Fujifilm sensor. When the pixels are read, two distinct pictures 20, 21 of the same scene are reconstructed, with different sensibilities and a slight spatial shift. The pictures are merged together to form a HDR picture. Again, the low sensitivity picture contains useful details for the brightest parts of the scene, and the high sensitivity one contains useful details for the darkest parts of the scene. For each merged pixel, the HDR reconstruction algorithm weighs the information from each of the two pictures of the sensor.

This solution requires a specialized CCD sensor, which is more expensive than regular ones. This inconvenience does not permit to optimize the compromise between the price and the capabilities of the camera.

Another publication named "High dynamic range imagining : Spatially varying pixel exposures" by S.K. Nayar & T. Mitsunaga discloses several solutions for sensors, either relying on multiple image sensors with beam splitters generating multiple copies of the optical image of the scene or multiple sensor elements within a pixel which is similar to the Fujifilm Super CCD EXR sensor.

The solutions comprise:
- Either adaptive pixel exposure where each pixel measures the time necessary to saturate its capacity with dedicated circuitry at each pixel, or;
- spatially varying pixel exposures, the pixel sensitivities vary by applying neutral density filters on the sensor pixel array.

Drawbacks of these solutions include that specialized sensors with beam splitters, or special circuitry to measure saturation times, or special physical filters applied to the sensor surface are required.

### Summary

Embodiments of the invention overcome at least some of the previous inconveniences of the state of the art. Embodiments of the invention enable an increase of the sensibility of pictures (i.e. allowing a high dynamic range) from a CMOS sensor.

A first aspect of the invention concerns a sensor arrangement comprising a driver and a sensor wherein a photodiode array is adapted to be addressed by row and column, rows or/and columns being grouped to define a plurality of different areas of pixels, the sensor comprising at least two arrangements of a plurality of areas, each arrangement being called a zone.

In some embodiments,
- a filter grid fits with the photodiode array, each area comprising the same filter pattern arrangement and ;
- the sensor configured to be driven by the driver to simultaneously capture at least two pictures with different exposure times, each of the at least two pictures being captured in a respective zone, a final picture being reconstructed by a merging operation of at least the two pictures captured.

In some embodiments, the sensor is a color sensor, the filter grid is a colour Bayer filter grid and the filter pattern arrangement is a Bayer patterns arrangement.

In some embodiments, the sensor arrangement is adapted to calculate a colour value of each pixel of each captured picture is calculated by a first interpolation operation applied to the filter.

In some embodiments, the sensor arrangement is adapted to calculate a colour value of each pixel of the final capture picture is calculated by a second interpolation operation applied to the filter.

In some embodiments, the first and/or the second interpolation operation is a demosaicing algorithm.

In some embodiments, the colour sensor is a CMOS sensor.

In some embodiments, each area comprises at least four pixels representing a square, whereof at least one pixel of each colour pattern.

In some embodiments, the sensor is adapted to simultaneously capture captures at least two pictures synchronized at a reset time.

In some embodiments, the sensor is adapted to simultaneously capture captures at least two pictures synchronized at a readout time.

In some embodiments, the sensor is adapted to simultaneously capture at least two pictures synchronized at a reset time, according to a capturing sequence comprising a reset sequence and a readout sequence of each zone of the photodiode array.

In some embodiments, the sensor is adapted to simultaneously capture at least two pictures synchronized at a readout time, according to a capturing sequence comprising a reset sequence and a readout sequence of each zone of the photodiode array.

In some embodiments, the sensor is adapted to simultaneously capture at least two pictures, the time exposure of the first picture overlapping the time exposure of the second picture, the reset sequence and the readout sequence of the second picture being completed during the first exposure time, according to a capturing sequence comprising a reset sequence and a readout sequence of each zone of the photodiode array

In some embodiments, the sensor is adapted to capture simultaneously a first picture in a first zone during a first exposure time and a second light acquisition in a second zone, the second light acquisition generating different pictures by activating a set of successive read out sequences, the different pictures issued from the second acquisition overlapping the capture of the first picture, the first picture and the second light acquisition having the same reset time.

In some embodiments, the sensor is adapted to capture a first picture in a first zone during a first exposure time and a second picture in a second zone during a second exposure time, the second exposure time overlapping the first exposure time, each zone comprising a plurality of areas comprising a plurality of rows of pixels, each area of the first zone being alternated with an area of the second zone.

In some embodiments, the sensor is adapted to capture a first picture in a first zone during a first exposure time and a second picture in a second zone during a second exposure time, the second exposure time overlapping the first exposure time, each zone comprising a plurality of areas defining a square of pixels, each square having the same size, each area of the first zone being alternated with an area of the second zone in the width and the length of the array.

In some embodiments, the sensor is adapted to capture :
- a first picture in a first zone during a first exposure time ;
- a second picture in a second zone during a second exposure time ;
- a third picture in a third zone during a third exposure time and ;
- a fourth picture in a fourth zone during a fourth exposure time ;
   the second, the third and the fourth exposure times overlapping the first exposure time, each zone comprising a plurality of areas defining a square of pixels, each square having the same size, each area of the first zone being alternated with an area of the second zone, a first sequence of successive alternated areas defining a first line in the width of the array, each area of the third zone being alternated with an area of the four zone, a second sequence of the successive alternated areas defining a second line in the width of the array, the array being defined by a successive final sequence of a first sequence alternated with a second sequence.

A second aspect of the invention concerns an imaging apparatus comprising a sensor arrangement of the invention.

A third aspect of the invention concerns a method for capturing high dynamic range picture comprising :
- defining a set of parameters on a sensor interface as the definition of :
   ○ a grid fitting with a photodiode array of the sensor;
   ○ an arrangement of different zones of a grid ;
   ○ an arrangement of different areas addressed by row and columns of the photodiode of the sensor
   ○ each exposure time of each zone comprising the definition of a configuration of different reset time and read out time;
- capturing pictures by the CMOS sensor and producing the different pictures in different zones ;
- reconstructing a final picture comprising at least :
   ○ execution of a first algorithm, called demosaicing algorithm, permitting to reconstruct a full colour image from an incomplete colour samples output from an image sensor overlaid with a colour filter array and ;
   ○ execution of a second algorithm permitting to merge different pictures captured in different zones having different sensitivities.

It is noted that the execution of the first and second algorithms may be performed in sequence, or in parallel (e.g simultaneously or overlapping). In some embodiments, the first and second algorithms are merged into a single algorithm.

### Brief description of the drawings

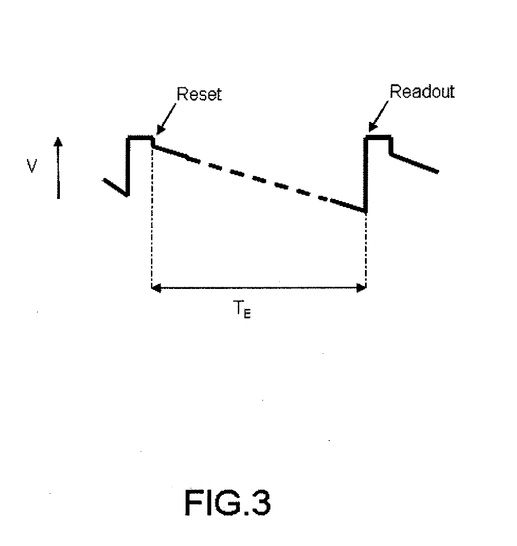

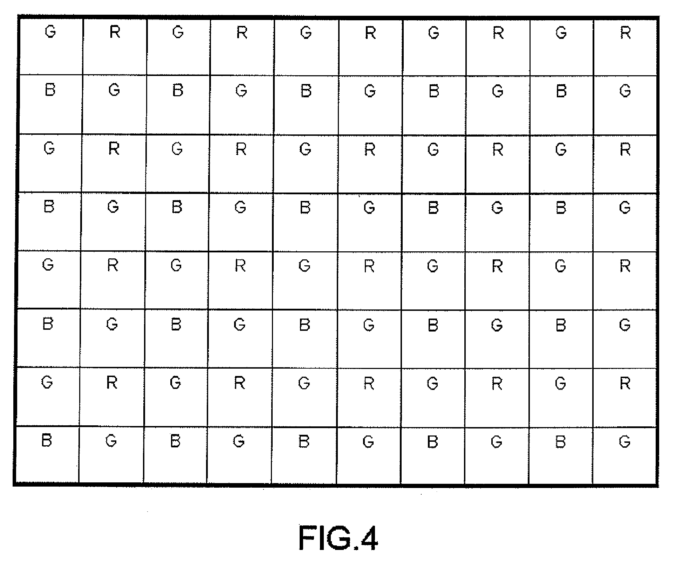

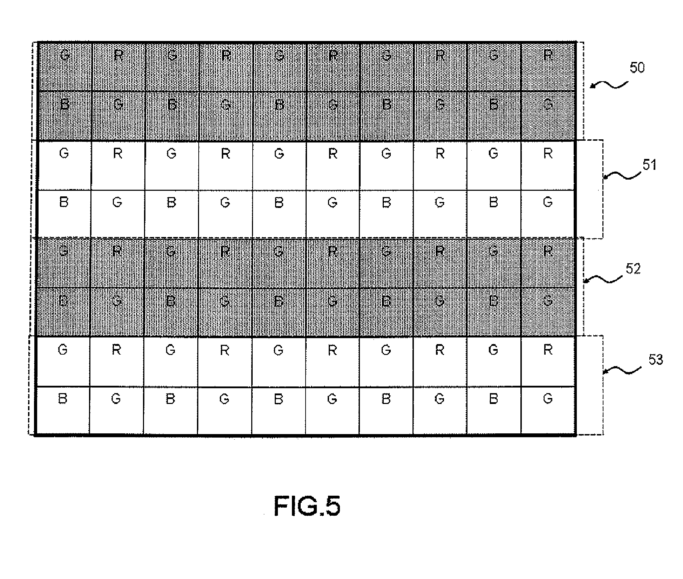

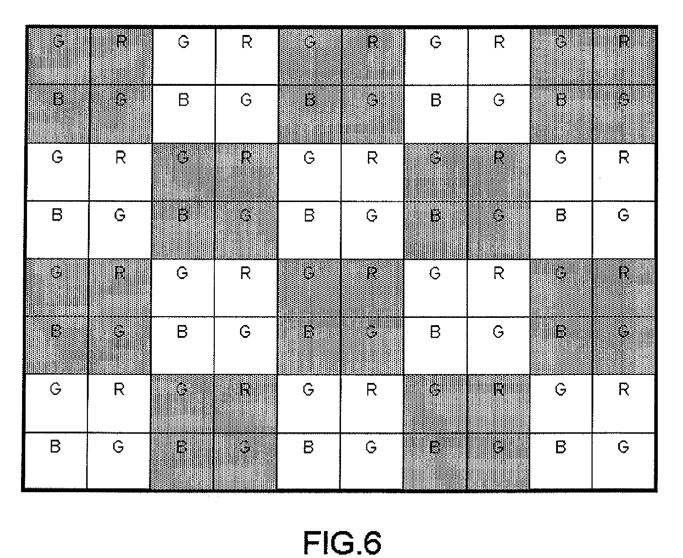

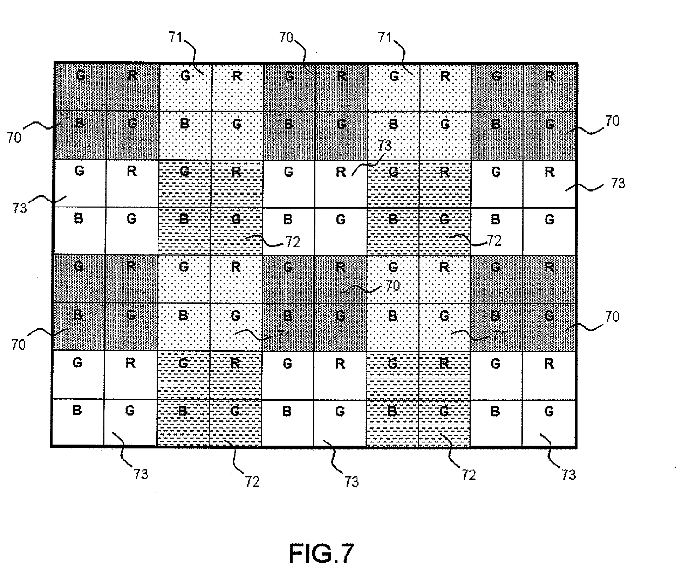

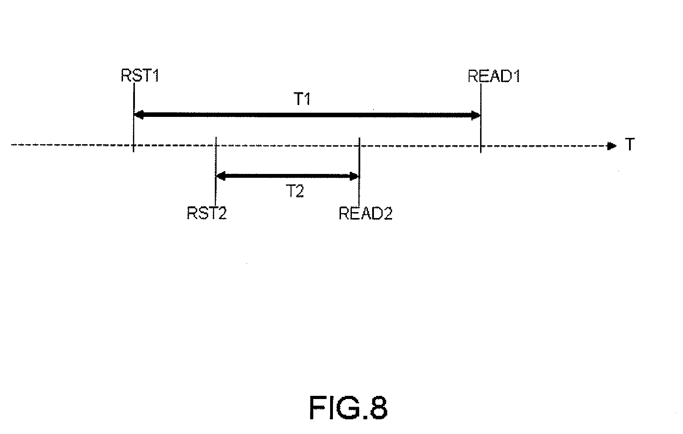

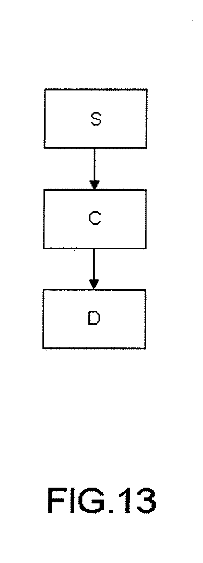

These and other aspects of the invention will be apparent from and elucidated with reference to the embodiments described hereafter where:
■ figure 1 : illustrates colour sensors of the state of the art ;
■ figure 2 : illustrates a merging operation of pictures taken by a sensor of the state of the art ;
■ figure 3 : illustrates a scheme of the evolution of voltage on CMOS photodiode during its exposure time according to some embodiments of the invention ;
■ figure 4 : illustrates one example of Bayer Grid patterns;
■ figure 5 : illustrates a first embodiment of the sensor of the invention comprising a Bayer filter grid wherein some different areas have different exposure time according to some embodiments of the invention;
■ figure 6 : illustrates a second embodiment of the sensor of the invention comprising a Bayer filter grid wherein some different areas have different exposure time according to some embodiments of the invention;
■ figure 7 : illustrates a third embodiment of the sensor of the invention comprising a Bayer filter grid wherein some different areas have different exposure time according to some embodiments of the invention;
■ figures 8, 9, 10 and 12 : illustrate four embodiments which comprise different configurations of the time exposure overlapping of different areas of a sensor of the invention according to some embodiments of the invention;
■ figure 13 : is a flowchart diagram representing the main steps of a method according to some embodiments of the invention.

### Detailed description

Embodiments of the invention involves digital cameras comprising CMOS image sensors which can capture at least two pictures with different exposure times, and thus different sensibilities by considering different areas of the sensor.

In the following description, the notions of "exposure time" or/and "integration time" are the same. It depends of the photographic approach or the electronics approach.

Figure 3 illustrates a graph representing the voltage evolution of a CMOS photodiode during its exposure time T_{E}.

Each pixel on the CMOS sensor accumulates photons in a linear way during its exposure time as shown on Figure 3.

The exposure time T_{E} begins by resetting the charge of the photodiode in order to erase previous expositions to light. Then, during the exposure time T_{E}, the voltage V of the photodiode varies proportionally to the number of photons falling onto it. The exposure time T_{E} ends when the photodiode voltage is read out during a readout time in order to determine the number of collected photons during the exposure time T_{E}.

A colour sensor, such as a CMOS sensor may consist of an array of photodiodes, placed behind, for example, a colour Bayer filter grid. Each photodiode will measure the incoming light in only one colour channel, such as red, green or blue.

Figure 4 illustrates an example of a Bayer filter comprising a plurality of patterns, called Bayer Patterns.

A Bayer filter mosaic is a colour filter array, called CFA, for arranging RGB colour filters on a square grid of photosensors. Its particular arrangement of colour filters is used in most single-chip digital image sensors used in digital cameras and camcorders to create a colour image. One example of a specific arrangement of Bayer filter patterns, represented in figure 4, is 50% green, 25% red and 25% blue, hence is also called GRGB, where G is a green pattern, R is a red pattern and B is a blue pattern. Other examples can be considered as other permutations such as RGGB.

The pattern illustrated in Figure 4 is only one particular arrangement. There can be other colour combinations: some colour filter arrays can have two types of green (G1RG2B), others can have white, green, red and blue components (WRGB).

In one embodiment, the Bayer filter comprises 50% green patterns, 25% red patterns and 25% blue patterns, called GRGB Filter.

In another embodiment, the Bayer filter comprises 25% green1 patterns, 25% green2 patterns, 25% red patterns and 25% blue patterns, called G1RG2B Filter.

In another embodiment, the Bayer filter comprises 25% white patterns, 25% green patterns, 25% red patterns and 25% blue patterns, called WRGB Filter.

Once a picture has been acquired by the sensor, an interpolation algorithm, called demosaicing, reconstructs red, green and blue values at every pixel location.

A demosaicing algorithm is a digital image process used to reconstruct a full colour image from the incomplete colour samples output from an image sensor overlaid with a colour filter array. The process is also known as CFA interpolation or colour reconstruction.

Digital cameras typically acquire images using a single image sensor overlaid with a CFA, so demosaicing is part of the processing pipeline required to render these images into a viewable format.

Many digital cameras can save images in a raw format allowing the user to demosaic it using software, rather than using the camera's built-in firmware.

The aim of a demosaicing algorithm is to reconstruct a full colour image, the full colour image having a full set of colour triples. The reconstruction of the image is realized from the spatially undersampled colour channels output from the CFA. The algorithm might have the following traits:
- Avoidance of the introduction of false colour artefacts, such as :
   ○ chromatic aliases ;
   ○ zippering which is an abrupt unnatural changes of intensity over a number of neighbouring pixels and ;
   ○ purple fringing ;
- Maximum preservation of the image resolution ;
- Low computational complexity for fast processing or efficient in-camera hardware implementation ;
- Amenability to analysis for accurate noise reduction.

Figure 5 represents one embodiment of a sensor of the invention which comprises a Bayer filter fitting with a specific arrangement of different areas of the sensors wherein an exposure time is dedicated to a group of areas, called zones.

Because CMOS sensors can address their photodiodes by row and columns, the sensor of the invention couples successive lines or columns in groups, to read out several pictures from the sensor, with different exposure times.

Figure 5 represents one embodiment of a sensor arrangement. The sensor captures a first picture in a first zone during a first exposure time and a second picture in a second zone during a second exposure time. The second exposure time overlaps the first exposure time. Each zone comprises a plurality of areas comprising a plurality of rows of pixels. Each area of the first zone is alternated with an area of the second zone.

In the example of Figure 5, a first area 50 comprises the two first lines of the sensor's photodiodes, a second area 51 comprises the two following lines of the sensor's photodiodes, a third area 52 comprises the two following first lines of the sensor's photodiodes, a fourth area 53 comprises the two last lines of the sensor's photodiodes.

Areas 51, 53 which are represented by white cells are exposed with an exposure time T1, called first integration time.

Areas 50, 52 which are represented by grey cells are exposed with a shorter exposure time T2, called second integration time.

The first integration time overlaps the second integration time.

A first picture comprising areas 51, 53 is captured and a second picture comprising areas 50, 52 is captured simultaneously on the sensor of the embodiment.

One embodiment of the invention comprises the definition of areas comprising at least four pixels representing a square. In this embodiment, each area comprises at least a red pixel, a blue pixel and two green pixels.

Figure 6 illustrates one example of such an embodiment, which represents a first alternative pattern arrangement, comprising the definition of two zones comprising a plurality of areas, each zone having its own exposure time.

Areas comprising white cells are exposed with a first integration time and the areas comprising the grey cells are exposed with a second integration time shorter than the first one.

Figure 6 represents another embodiment of a sensor arrangement. The sensor captures a first picture in a first zone during a first exposure time and a second picture in a second zone during a second exposure time. The second exposure time overlaps the first exposure time. Each zone comprises a plurality of areas defining a square of pixels. Each square has the same size. Each area of the first zone is alternated with an area of the second zone in the width and the length of the array.

It is noted that the patterns described herein are merely illustrative examples and that other patterns may be equally applicable for embodiments of the invention. One example may be a pattern similar to the one shown in figure 5 with the areas arranged column-wise instead of row-wise. Another example may be a pattern similar to the one shown in Figure 6 but with 8 or 16 diodes grouped together instead of 4. Yet another example may be a pattern similar to the one shown as in figure 6 but shifting every other row by 1 (resulting in a form of diagonal zones).

Figure 7 illustrates another example of such an embodiment, which represents a second alternative pattern arrangement, comprising the definition of four zones comprising a plurality of areas, each zone having its own exposure time.

A first zone comprises a plurality of areas 70, a second zone comprises a plurality of areas 71, a third zone comprises a plurality of areas 72, and a forth zone comprises a plurality of areas 73. Each zone represents a picture captured with its own exposure time.

Figure 7 represents another embodiment of a sensor arrangement. The sensor captures :
- a first picture in a first zone during a first exposure time ;
- a second picture in a second zone during a second exposure time ;
- a third picture in a third zone during a third exposure time and ;
- a fourth picture in a fourth zone during a fourth exposure time.

The second, the third and the forth exposure times overlap the first exposure time. Each zone comprising a plurality of areas defining a square of pixels, each square having the same size.

Each area of the first zone is alternated with an area of the second zone, a first sequence of successive alternated areas defining a first line in the width of the array.

Each area of the third zone is alternated with an area of the fourth zone, a second sequence of the successive alternated areas defining a second line in the width of the array.

The array is defined by a successive final sequence of a first sequence alternated with a second sequence.

In some embodiments of the invention, the demosaicing algorithm is applied independently for each zone.

The sensor of the invention permits to reconstruct the full picture with a first algorithm as a demosaicing algorithm and a second algorithm which permits to merge different pictures having different sensitivities as described in figure 2.

Some embodiments of the invention may use as a second algorithm, the algorithm of Paul Debevec described in the publication "Recovering High Dynamic Range Radiance maps from Photographs", ACM Transactions of Graphics (Proceeding of the ACM SIGGRAPH'97), Los Angeles, California, August 1997.

In such embodiments, multiple photographs of the scene are taken with different amounts of exposure. This second algorithm is applied for an imaging apparatus of the invention with a set of photographs of the scene captured simultaneously.

The second algorithm uses these differently exposed photographs to recover the response function of the imaging process, up to factor of scale, using the assumption of reciprocity. With the known response function, the algorithm can fuse the multiple photographs into a single, high dynamic range radiance map whose pixel values are proportional to the true radiance values in the scene.

In another embodiment of the invention, a unified reconstruction algorithm is applied to all zones of the sensor, the different zones having different sensitivities. This reconstruction algorithm takes in charge both the demosaicing and the merging process of the zones having different sensibilities.

One advantage of embodiment of the invention is that it is possible to acquire a high dynamic range picture with a single exposure of a CMOS sensor.

According to some embodiments, pixels are grouped in areas taking into account the colour (R, G, B) repartition of pixels from the Bayer grid definition.

The definition of zones having their own exposure time permits to generate a homogenised colour distribution for each picture of each zone.

The example of figure 6 permits to define groups of four pixels, a red pixel, a blue pixel and two green pixels. This distribution of colour is applied for each area.

In one embodiment of the invention, each area comprises at least four pixels representing a square, whereof at least one pixel of each colour pattern.

This advantage permits to avoid the definition of zones having different colour distribution that may be difficult to combine during the demosaicing process.

Figures 8, 9, 10, 12 illustrate different embodiments for a CMOS sensor comprising a photodiodes array able to read out at least two pictures comprising at least two different exposure times. Different ways to overlap the exposure times for the at least two pictures can be implemented depending on the particular realization of the embodiment.

Each of the embodiments illustrated in figures 8-12 may take advantage of a specific configuration by setting parameters in a preliminary step, which parameters define a synchronization in some way of the integration sequences of the pictures.

Figure 8 represents a first and a second acquisition sequence of a sensor acquisition. The photodiodes array is partitioned, for example, into several zones as shown in figure 5, 6, 7.

The first acquisition sequence comprises a first integration time, T₁, of a first picture captured by the sensor.

The first acquisition sequence comprises:
- a reset sequence RST1 lasting a first short period T_{RST1} at the beginning of the integration sequence ;
- an integration sequence lasting a longer period T₁ and ;
- a read out sequence READ1 at the end of the integration sequence lasting a second short period T_{READ1}.

The second acquisition sequence comprises a second integration time T₂ of a second picture captured by the sensor.

The second acquisition sequence comprises:
- a reset sequence RST2 lasting a first short period T_{RST2} at the beginning of the integration sequence ;
- an integration sequence lasting a longer period T₂ and ;
- a read out sequence READ2 at the end of the integration sequence lasting a second short period T_{READ2}.

Both exposure times T₁, T₂ overlap, as shown on the time scale in figure 8, marked by reset times RST1 and RST2, and readout times READ1 and READ2 on each pixels partition.

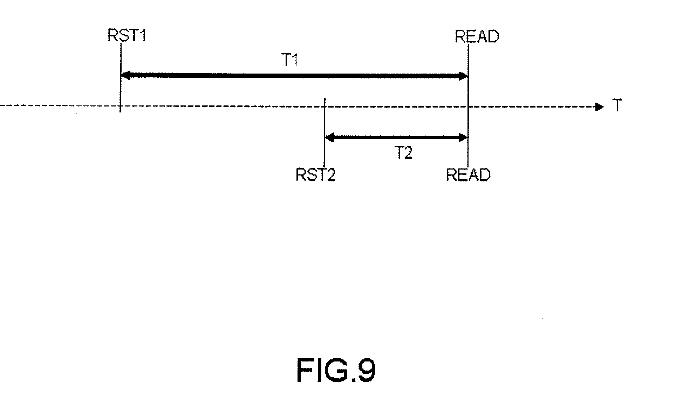

Figure 9 represents a first and a second acquisition sequence of a sensor acquisition which are synchronized by the same read out sequence for a reading time READ and ending at the same moment.

The reset times RST1, RST2 are not simultaneous.

Due to technological reasons, it may be easier for a sensor to have multiple reset times and a single readout of the entire picture, as shown on the time scale in the figure 9.

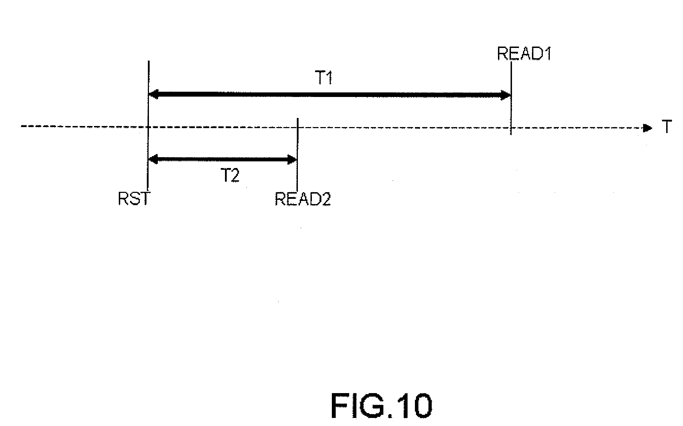

Figure 10 represents a first and a second acquisition sequences of a sensor acquisition which are synchronized by the same reset sequence for a resetting time RST and starting at the same moment.

The read out times READ1, READ2 are not simultaneous.

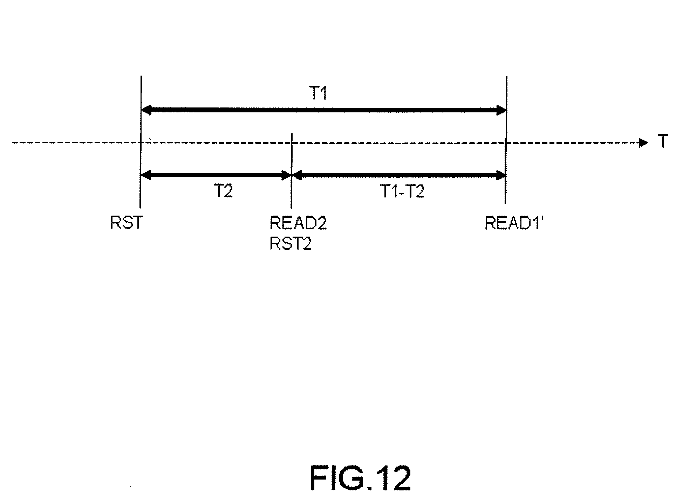

Figure 12 represents two acquisitions sequences of a sensor acquisition, having their own exposure time T₂ and T₁-T₂. In this embodiment, there are two consecutive captures. A first capture has a first reset time and its own exposure time T₂. The second capture begins with a second reset time after the readout sequence of the first capture. In the example of figure 12, the second readout sequence READ1' would occur T₁-T₂ seconds after the first readout sequence READ2.

This embodiment can be arranged with previous embodiments.

For instance, the example of figure 6 can be driven by different combinations of different integration sequences described in figures 8, 9, 10 and 12.

The example of figure 7 can be driven by different combinations of different integration sequences described in figure 8, 9, 10 and 12 considering a plurality of reset and readout sequences and four exposure time.

In another embodiment of the invention, the sensor captures simultaneously a first picture in a first zone during a first integration time and a second light acquisition in a second zone, the second light acquisition generating different pictures by activating a set of successive read out sequences. The different pictures issues from the second acquisition overlap the capture of the first picture, the first picture and the second light acquisition having the same reset time.

The different embodiments allow to turn a regular CMOS sensor into a High Dynamic Range sensor, called HDR, without the need to physically modify it.

Unlike specialized HDR sensors which are typically limited in resolution due to their dedicated pixel circuitry, the embodiments can enjoy resolutions superior to 10 Megapixels.

As opposed to consecutive multiple shot techniques, embodiments of the invention can acquire non-static scenes: the different pixel sensitivities may be obtained by varying exposure times and the exposure times may overlap. Thus, the effects of moving objects is minimized.

A driver and an interface of the sensor permit to implement the solution of the invention.

In one embodiment of the invention, the photodiode array and a CMOS driver with a decoder circuit are integrated on a same substrate.

The driver operates an image sensor by inputting signals as clock signal and start signal with a predefined power supply. Besides the driver allows outputs signal for A/D conversion.

Figure 13 illustrates a flowchart diagram of a capture by a colour sensor according to some embodiments of the invention.

A first step, called S, allows a camera to set the acquisition parameters on the sensor interface according to one embodiment of the invention.

A first set of parameters permits to define the sensor pixels partitioning and a second set of parameters permits to define the different integration times and the overlap synchronization between the different exposure sequences.

A second step, called C, comprises the image capture by the CMOS sensor, producing the partitions of pixels with varying exposure times.

A third step, called D, comprises an algorithm allowing the reconstruction of full picture. This algorithm comprises at least the raw (Bayer) demosaicing and the merging of the pixels partitions to reconstruct the HDR picture.

In another aspect of the invention, a method for capturing high dynamic range picture comprises :
- defining a set of parameters on a sensor interface as the definition of:
   ○ a Bayer grid fitting with a photodiode array of the sensor;
   ○ an arrangement of different zones of a grid ;
   ○ an arrangement of different areas addressed by rows and columns of the photodiode of the sensor
   ○ each exposure time of each zone comprising the definition of a configuration of different reset time and read out time;
- capturing pictures by the CMOS sensor and producing the different pictures in different zones ;
- reconstructing a final picture comprising at least :
   ○ execution of a first algorithm, called demosaicing algorithm, permitting to reconstruct a full colour image from an incomplete colour samples output from an image sensor overlaid with a colour filter array and ;
   ○ execution of a second algorithm permitting to merge different pictures captured in different zones having different sensitivities.

One advantage of the imaging apparatus of the invention is to permit to increase the dynamic range of an acquired picture without need of a specific sensor. The imaging apparatus of the invention and the associated method allow the use of any common sensor where sensor elements can be addressed independently (e.g. by rows and/or columns). For instance, the sensor of the invention does not need pixels of different sizes.

Therefore, the sensor hardware of the invention doesn't need to have separate transfer gate control lines to address different type of pixels.

Another advantage of the imaging apparatus of the invention is that parameters such as :
- the Bayer grid ;
- the arrangement of different zones of a Bayer grid ;
- the arrangement of different areas addressed by row and columns of the photodiode of the sensor
- each exposure time of each zone comprising the definition of the configuration of different reset time and read out time,
can be configured through an interface of the imaging apparatus.

Another advantage of the invention is that the imaging apparatus of the invention does not need extra circuits such as shift registers or decoders to be able to handle each zone separately and sequentially.

Another advantage of the invention is that a specific granularity of the sensitivity of the sensor can be configured by choosing the width or the height of areas on the interface of the imaging apparatus. This feature permits to adapt a specific compromise between the best way for easing up the demosaicing process and distributing a homogenised colour and exposure areas of each zone.

In some embodiments, pixels are grouped in a minimum by four to form an area. That distribution may facilitate the demosaicing process.

## Claims

1. A sensor arrangement comprising a driver and a sensor wherein a photodiode array is adapted to be addressed by row and column, rows or/and columns being grouped to define a plurality of different areas of pixels, the sensor comprising at least two arrangements of a plurality of areas, each arrangement being called a zone, **characterised in that**
• a filter grid fits with the photodiode array, each area comprising a same filter pattern arrangement ;
• the sensor is configured to be driven by the driver to simultaneously capture at least two pictures with different exposure times, each of the at least two pictures being captured in a respective zone, a final picture being reconstructed by a merging operation of at least the two pictures captured.

2. A sensor arrangement according to claim 1, **characterized in that** the sensor is a color sensor, the filter grid is a colour Bayer filter grid and the filter pattern arrangement is a Bayer pattern arrangement.

3. A sensor arrangement according to claim 2, **characterized in that** the sensor arrangement is adapted to calculate a colour value of each pixel of each captured picture by a first interpolation operation applied to the filter.

4. A sensor arrangement according to claim 2, **characterized in that** the sensor arrangement is adapted to calculate a colour value of each pixel of the final capture picture by a second interpolation operation applied to the filter.

5. A sensor arrangement according to any one of claims 3 to 4, **characterized in that** the first and/or the second interpolation operation is a demosaicing algorithm.

6. A sensor arrangement according to any one of claims 1 to 5, **characterised in that** the colour sensor is a CMOS sensor.

7. A sensor arrangement according to any one of claims 1 to 6, **characterised in that** the sensor is adapted to simultaneously capture at least two pictures synchronized at a reset time, according to a capturing sequence comprising a reset sequence and a readout sequence of each zone of the photodiode array.

8. A sensor arrangement according to any one of claims 1 to 6, **characterised in that** the sensor is adapted to simultaneously capture at least two pictures synchronized at a readout time, according to a capturing sequence comprising a reset sequence and a readout sequence of each zone of the photodiode array.

9. A sensor arrangement according to any one of claims 1 to 6, **characterised in that** the sensor is adapted to simultaneously capture at least two pictures, the time exposure of the first picture overlapping the time exposure of the second picture, the reset sequence and the readout sequence of the second picture being completed during the first exposure time, according to a capturing sequence comprising a reset sequence and a readout sequence of each zone of the photodiode array

10. A sensor arrangement according to any one of claims 1 to 9, **characterised in that** the sensor is adapted to capture simultaneously a first picture in a first zone during a first exposure time and a second light acquisition in a second zone, the second light acquisition generating different pictures by activating a set of successive read out sequences, the different pictures issued from the second acquisition overlapping the capture of the first picture, the first picture and the second light acquisition having the same reset time.

11. A sensor arrangement according to any one of claims 1 to 10, **characterised in that** the sensor is adapted to capture a first picture in a first zone during a first exposure time and a second picture in a second zone during a second exposure time, the second exposure time overlapping the first exposure time, each zone comprising a plurality of areas comprising a plurality of rows of pixels, each area of the first zone being alternated with an area of the second zone.

12. A sensor arrangement according to any one of claims 1 to 10, **characterised in that** the sensor is adapted to capture a first picture in a first zone during a first exposure time and a second picture in a second zone during a second exposure time, the second exposure time overlapping the first exposure time, each zone comprising a plurality of areas defining a square of pixels, each square having the same size, each area of the first zone being alternated with an area of the second zone in the width and the length of the array.

13. A sensor arrangement according to any one of claims 1 to 10, **characterised in that** the sensor is adapted to capture :
• a first picture in a first zone during a first exposure time ;
• a second picture in a second zone during a second exposure time ;
• a third picture in a third zone during a third exposure time and ;
• a fourth picture in a fourth zone during a fourth exposure time ;
the second, the third and the fourth exposure times overlapping the first exposure time, each zone comprising a plurality of areas defining a square of pixels, each square having the same size, each area of the first zone being alternated with an area of the second zone, a first sequence of successive alternated areas defining a first line in the width of the array, each area of the third zone being alternated with an area of the four zone, a second sequence of the successive alternated areas defining a second line in the width of the array, the array being defined by a successive final sequence of a first sequence alternated with a second sequence.

14. An imaging apparatus comprising a sensor arrangement of any of claims 1 to 13.

15. A method for capturing high dynamic range picture comprising :
• defining a set of parameters on a sensor interface as the definition of :
○ a grid fitting with a photodiode array of the sensor;
○ an arrangement of different zones of a grid ;
○ an arrangement of different areas addressed by row and columns of the photodiode of the sensor
○ each exposure time of each zone comprising the definition of a configuration of different reset time and read out time;
• capturing pictures by the CMOS sensor and producing the different pictures in different zones ;
• reconstructing a final picture comprising at least :
○ execution of a first algorithm, called demosaicing algorithm, permitting to reconstruct a full colour image from an incomplete colour samples output from an image sensor overlaid with a colour filter array and ;
○ execution of a second algorithm permitting to merge different pictures captured in different zones having different sensitivities.
